# EUROPÄISCHE PATENTSCHRIFT

(11) **EP 3 886 662 B1**
(45) Veröffentlichungstag und Bekanntmachung des Hinweises auf die Patenterteilung: **01.05.2024**
(21) Anmeldenummer: 19739968.6
(22) Anmeldetag: 10.07.2019
(51) Int. Cl.: A47J 43/046, A47J 43/07

(54) **GERÄT ZUM VERARBEITEN VON LEBENSMITTELN**
APPLIANCE FOR PROCESSING FOODSTUFFS
APPAREIL DE TRAITEMENT D'ALIMENTS

(30) Priorität: 28.11.2018 DE 102018220446
(43) Veröffentlichungstag der Anmeldung: 06.10.2021
(73) Patentinhaber: De'Longhi Braun Household GmbH, 63263 Neu-Isenburg (DE)
(72) Erfinder: SILVESTRINI, Gian Luca, 60318 Frankfurt am Main (DE); VU, Duy-Phong, 65824 Schwalbach am Taunus (DE); UNGERER, Markus, 64367 Mühltal (DE); STOPPEL, Olga, 65719 Hofheim (DE); DE LUCA, Mirja, 65197 Wiesbaden (DE)
(74) Vertreter: Hoffmann Eitle
(86) Internationale Anmeldenummer: PCT/EP2019/068560
(87) Internationale Veröffentlichungsnummer: WO 2020/108807

(56) Entgegenhaltungen:
- WO-A1-2007/075167
- DE-A1- 2 736 641
- US-A1- 2005 122 837
- US-A1- 2012 170 404

## Beschreibung

### Technisches Gebiet

Die vorliegende Erfindung betrifft ein Gerät zum Verarbeiten von Lebensmitteln.

### Stand der Technik

Im Stand der Technik sind Geräte bekannt, die im Haushalt verwendet werden, um Lebensmittel zu verarbeiten wie zum Beispiel Standmixer. Bei einem solchen Standmixer ist ein Behälter auf einer Basis angebracht, welche typischerweise einen Motor enthält. Dieser Motor kann ein in dem Behälter angeordnetes Arbeitsteil (zum Beispiel in der Form von drehbaren Klingen) antreiben. Diese Klingen interagieren mit dem Lebensmittel in dem Behälter und verarbeiten dieses.

Typische Behälter haben eine Krugform, wobei der Durchmesser in einem Querschnitt parallel zur Horizontalen deutlich kleiner ist als die gesamte Länge des Behälters entlang der Drehachse des Arbeitsteils - anders gesagt sind die Behälter schlank. Die Querschnittsform kann z.B. rund, dreieckig, rechteckig oder quadratisch sein und kann sich auch von der einen in die andere Form entlang der Höhe des Behälters verändern. Im Inneren des Behälters sind oft Rippen angeordnet, die sich meist von der Unterseite bis zur maximalen Füllhöhe erstrecken. Diese Rippen dienen dazu, das Umlaufen und die Zirkulation von Lebensmitteln innerhalb des Behälters zu verbessern. Ein Beispiel für einen solchen Behälter ist in GB 1 388 119 A gezeigt.

Das Arbeitsteil bzw. die Klingen sind an der Unterseite des Behälters angeordnet. Der Behälter kann aus verschiedenen Materialien hergestellt sein, wie zum Beispiel Kunststoff oder Glas, welche spritzgegossen oder geblasen sein können. An der Oberseite des Behälters befindet sich ein Deckel, der eine entfernbare Abdeckung in der Mitte haben kann, um während des Verarbeitens Flüssigkeiten oder andere Zutaten hinzufügen zu können. Ein solcher Behälter weist oft einen Ausguss an der Oberseite auf, um die hergestellten Lebensmittel leicht und ohne Verschütten servieren zu können. Solche Standmixer können auch verwendet werden, um Sojamilch oder Fruchtsäfte herzustellen. Hierbei wird typischerweise ein zusätzlicher zylindrischer Filter eingesetzt, der die Klingen bzw. das Arbeitsteil umgibt und der durch den Deckel fixiert wird.

Ein weiterer Standmixer gemäß des Oberbegriffs des Anspruchs 1 ist aus DE 2736641 A1 bekannt.

### Darstellung der Erfindung

Den Erfindern ist aufgefallen, dass die Standmixer aus dem Stand der Technik Nachteile mit sich bringen. So sind Standmixer mit einer typischen Füllmenge von ca. 2 l vergleichsweise hoch, und es ist daher schwierig, diese in einem Schrank in einer Küche oder unter einem Küchenoberschrank aufrecht aufzubewahren oder zu benutzen. Das Verhältnis von Höhe zu maximaler Füllmenge ist somit ineffizient. Des Weiteren ist den Erfindern aufgefallen, dass es aufgrund der vergleichsweise großen Höhe des Standmixers in Bezug auf die maximale Füllmenge zu einer hohen Verarbeitungszeit kommt, bis alle Lebensmittel verarbeitet sind, was dann dazu führen kann, dass die Lebensmittel durch Reibung erwärmt werden und sich ihr Nährwert verschlechtert. Aufgrund des kleinen Querschnitts im Vergleich zur Höhe dauert es lange, bis alle Lebensmittel ausreichend oft am Arbeitsteil vorbei geführt werden, um ein zufriedenstellendes Ergebnis zu erreichen. Durch die Reibung, die durch die Bewegung im Verarbeitungsgut selbst und den mechanischen Komponenten des Mixers entsteht, können sich die Lebensmittel mitunter stark erwärmen.

Den Erfindern ist auch aufgefallen, dass es beim Zerkleinern von Eiswürfeln oft sehr ungleichmäßige Ergebnisse gibt. Dies liegt daran, dass sich das Arbeitsteil meist über die gesamte Bodenfläche des Behälters erstreckt und so das bereits zerkleinerte Eis wiederholt mit dem Arbeitsteil in Kontakt gerät, somit zu stark zerkleinert wird und zusätzlich aufgewärmt wird und daher schmilzt. Die größeren Eiswürfel werden jedoch teilweise von dem Arbeitsteil nicht oder nur wenig berührt und werden somit nicht zerkleinert, da sich in der Regel die schon zerkleinerten Eiswürfel im unteren Behälterbereich, in dem das Arbeitsteil sitzt, festsetzen und die großen Eiswürfel somit nicht mehr mit dem Arbeitsteil in Berührung kommen. Demgemäß ergibt sich beim Zerkleinern von Eiswürfeln ein inkonsistentes Ergebnis, bei dem vergleichsweise große Stücke aus Eis im Eiswasser schwimmen und diese dann auch nicht oder kaum durch die Klingen erreicht werden.

Ein weiterer Nachteil ist den Erfindern beim Herstellen von Sojamilch aufgefallen. Beim Herstellen von Sojamilch werden die eingeweichten Sojabohnen in einen typischerweise zylinderförmigen Filter hinein gegeben, welcher in den Behälter eingesetzt wird und das Arbeitsteil umgibt. Eine solche Anordnung ist beispielsweise in CN201022626Y gezeigt. Die Bohnen werden innerhalb des Filters zerkleinert. Die Milch wird dann durch den Filter aufgrund der Bewegung des Arbeitsteils hindurch nach außen gedrückt und sammelt sich im Zwischenraum zwischen der Außenwand des Filters und der Innenwand des umgebenden Behälters. Bei einem typischen, vergleichsweise "schlanken" Behälter gibt es jedoch nur wenig Platz außerhalb des Filters, um die hergestellte Sojamilch aufzunehmen. Insofern ergibt sich eine vergleichsweise geringe Füllmenge.

Die vorliegende Erfindung wurde vorgenommen, um die genannten Nachteile zu umgehen. Die Erfindung wird durch Anspruch 1 definiert.

Nach Anspruch 1 weist ein Gerät zum Verarbeiten von Lebensmitteln einen Behälter auf. Dieser Behälter wird durch Wände definiert, die wiederum einen Raum definieren, in dem die zu verarbeitenden Lebensmitteln aufgenommen werden können. Anders gesagt handelt es sich bei diesem Behälter um diejenige Komponente, in welcher die zu verarbeitenden Lebensmittel verarbeitet werden. Bei dem erfindungsgemäßen Gerät kann es sich insbesondere um einen Standmixer handeln. Prinzipiell wäre es jedoch auch denkbar, dass dieses Gerät eine Mühle (zum Beispiel Kaffeemühle) oder eine Küchenmaschine bzw. Food Processor ist. Andere Anwendungsmöglichkeiten sind auch denkbar.

Innerhalb dieses Raumes ist ein Arbeitsteil angeordnet. Bei diesem Arbeitsteil kann es sich typischerweise um eine drehbar gelagerte Klinge handeln, die in dem Behälter gedreht werden kann und somit die in dem Behälter befindlichen Lebensmittel verarbeitet.

Erfindungsgemäß hat der durch die Wände definierte Raum eine Form, die zumindest in Teilen im Wesentlichen ein Kugelabschnitt ist. Unter einer Kugelform wird hierbei verstanden, dass die Wände von einem Zentrum, welches sich im Inneren der Kugel befindet, einen konstanten Abstand bzw. Radius haben. Darunter, dass die Form nur "im Wesentlichen" ein Kugelabschnitt bzw. eine Kugelform ist, wird verstanden, dass an der Innenwand gegebenenfalls Vorsprünge vorgesehen sein können, die sich in den Innenraum hinein erstrecken (oder auch Ausstülpungen, die sich vom Innenraum weg erstrecken), solange die Gesamtform des Innenraums noch als Kugelabschnitt oder Kugel erkennbar ist. Darunter, dass es sich bei der Form des Raumes um einen Kugelabschnitt handelt, wird verstanden, dass der Raum keine komplette Kugel sein muss (auch wenn er dies sein kann). Unter einem Kugelabschnitt wird hierbei ein Abschnitt einer Kugel verstanden, der sich dadurch ergibt, dass man bei einer kompletten Kugel einen oder mehrere gerade Schnitte entlang einer Ebene vornimmt und somit einen Teil der Kugel entfernt, wobei ein Teil der Kugeloberfläche beibehalten wird. Vorliegend wird unter dem Begriff "Kugel" eine Kugel im mathematischen Sinn verstanden, d.h. ein geometrisches Objekt, dessen Begrenzung einen konstanten Abstand von einer Mitte hat. Es sind jedoch, wie auch weiter oben erwähnt, geringfügige Abweichungen von einer idealen Kugelform möglich.

Den Erfindern ist aufgefallen, dass ein solcher, im Wesentlichen kugelförmiger Behälter sehr effizient ist, was die Raumausnutzung angeht: Eine Kugel des gleichen Füllvolumens hat, bei gleicher Abmessung des Behälterbodens und des sich dort befindlichen Arbeitsteils, eine kleinere Höhe, als ein schlanker Behälter, wie oben beschrieben. Bei einer Kugel handelt es sich um denjenigen Körper, der das beste Verhältnis von maximaler Abmessung zu Volumeninhalt hat. Insofern kann mit einem entsprechenden Behälter die Gesamthöhe des Geräts zum Verarbeiten von Lebensmitteln verringert werden. Ein die Kugel außen umschreibender Zylinder des gleichen Durchmessers hätte zwar eine noch geringere Höhe bei gleichem Volumen, würde es jedoch mit sich bringen, dass das Arbeitsteil angepasst an den größeren Behälterbodendurchmesser vergrößert werden müsste, um Lebensmittel mit wenig Totraum zwischen Arbeitsteil und Behälterwand effizient zu verarbeiten. Die beanspruchte Gestaltung verringert somit den Raumbedarf für die Aufbewahrung und während der Verwendung auf der Arbeitsfläche oder unter einem Hängeschrank.

Außerdem ergibt sich beim Herstellen von Lebensmitteln wie zum Beispiel Püree oder Smoothies eine bessere Zirkulation als bei einer zylindrischen oder konischen Form. Dies liegt u.a. daran, dass aufgrund der Kugelform der mittlere Abstand des zu verarbeitenden Gutes zum Messer geringer ist und dadurch eine schnellere Umwälzung stattfinden kann. Aufgrund der besseren Zirkulation wird die Verarbeitungsdauer verringert, und es kann auch verhindert werden, dass sich die zu verarbeitenden Lebensmitteln unnötig stark durch Reibung erhitzen, welches für kalte Getränke wie Smoothies, Shakes und Cocktails unerwünscht ist und außerdem zur Schädigung von Nährstoffen führen kann. Insofern sind die mit einem solchen Gerät verarbeiteten Lebensmittel von einer höheren Qualität. Außerdem ergibt sich durch die kugelförmige Gestalt bei der Herstellung von Sojamilch und der Verwendung eines oben beschriebenen zylindrischen Filters ein zusätzliches Volumen für Sojamilch, welche durch den Filter gedrückt wird. Somit kann die mögliche Füllmenge an Sojamilch erhöht werden.

Die genannten Vorteile ergeben sich auch, wenn auch u.U. nur in geringerem Maße, wenn nur der Deckel des Behälters die Form eines Kugelabschnitts hat, während das Unterteil eine beliebige Form hat. Hier würde die Form des Deckels dazu führen, dass die Zirkulation der zu verarbeitenden Lebensmittel verbessert wird, sofern ein entsprechend hoher Füllstand erzielt wird.

Bevorzugt umgibt die Kugelabschnittsform das Arbeitsteil entlang aller drei Dimensionen.

Unter dem Merkmal, dass die Kugelabschnittsform das Arbeitsteil umgibt, wird verstanden, dass sich das Arbeitsteil in dem Raum bewegt, der durch den Kugelabschnitt definiert ist. D.h. die Lebensmittel, die durch das Arbeitsteil verarbeitet werden, werden innerhalb des Raums, der ein Kugelabschnitt ist, verarbeitet. Typischerweise befinden sich das Arbeitsteil und somit auch der Kugelabschnitt an der Unterseite des Geräts (d.h. derjenigen Seiten des Geräts, die bei bestimmungsgemäßen Gebrauch unten ist). Ein solcher Kugelabschnitt an der Unterseite des Geräts kann unten abgeschnitten, also flach sein, was bedeutet, dass der Kugelabschnitt u.a. aus einer Kugel erzeugt wurde, die parallel zur Unterseite flach abgeschnitten wurde. Alternativ kann die den Kugelabschnitt nach unten verschließende Fläche aber auch eine andere, von der Kugelform abweichende Form haben.

Die beim Zerkleinern von Eis sich ergebenden Ergebnisse sind besser, da sich das bereits zerkleinerte Eis in der durch die Kugelform entstehende Wölbung radial außerhalb des Arbeitsteils sammeln kann und nicht erneut mit dem Arbeitsteil in Kontakt gerät und durch zu großen Kontakt mit diesem zu schmelzen beginnt. Dadurch können auch die noch nicht zerkleinerten Eiswürfel das Arbeitsteil besser erreichen und werden noch zerkleinert. Insofern ergibt sich eine bessere Gleichmäßigkeit der zerkleinerten Eiswürfel und somit eine höhere Kapazität für die Verarbeitung.

Insbesondere wird hierbei angedacht, dass das Arbeitsteil drehbar angeordnet ist und der Radius des Arbeitsteils in Bezug auf die Drehachse weniger als 50% des Radius des Kugelabschnitts ist.

Bevorzugt umfasst der Kugelabschnitt einen Abschnitt der Kugel, der größer ist als eine Halbkugel. Bevorzugt handelt es sich um mehr als 70% einer Gesamtoberfläche der Kugel, die durch den Kugelabschnitt umfasst wird, und noch stärker bevorzugt ist der Kugelabschnitt eine Kugel. Hierdurch wird sichergestellt, dass sich die vorteilhaften Effekte der Verwendung eines Kugelabschnitts über einen Großteil des Behälters bzw. über den gesamten Behälter hinweg ergeben, was dazu führt, dass die oben genannten Vorteile in erheblichem Maße erzielt werden.

Bevorzugt weist der Behälter ein erstes und zweites Segment auf, die lösbar miteinander verbunden sind und zusammen den Kugelabschnitt definieren. Hierbei umgibt das erste Segment das Arbeitsteil und das zweite Segment kann auf dem ersten Segment angeordnet werden (d.h. es befindet sich oberhalb des ersten Segments). Durch die lösbare Anordnung des ersten und zweiten Segments kann der Behälter leichter gereinigt werden, und das Gerät kann auch platzsparender aufbewahrt werden, da man durch das Abnehmen des zweiten Segments von dem ersten Segment die Höhe verringern kann.

In diesem Zusammenhang wird besonders bevorzugt, dass das erste und das zweite Segment zusammen eine Kugel als den Kugelabschnitt definieren. Das zweite Segment weist eine Öffnung auf, durch die auch bei Betrieb des Geräts zu verarbeitende Zutaten in den Raum eingeführt werden können. Es ist auch möglich, dadurch andere Lebensmittel einzuführen. Durch das Vorhandensein der Öffnung wird das Verarbeiten von Lebensmitteln erleichtert, indem Lebensmittel nachträglich in den Raum eingeführt werden können.

Weiterhin wird bevorzugt, dass ein drittes Segment vorgesehen ist, welches auf dem zweiten Segment lösbar angeordnet ist. Das zweite Segment ist ringförmig ausgebildet und das zweite und das dritte Segment definieren zusammen eine Halbkugel, wobei auch das erste Segment im Wesentlichen eine Halbkugel definiert. Hierbei wird jedoch besonders bevorzugt, dass das erste Segment mehr als eine Halbkugel umfasst und oben wie bei einem klassischen Standmixer ein kleiner Deckel mit einer Einfüllöffnung diese Öffnung verschließt. Das dritte Segment weist bevorzugt eine Öffnung auf, durch die zu verarbeitende Zutaten in den Raum eingeführt werden können. Hierdurch kann insbesondere durch das Vorhandensein des dritten Segments, welches von dem zweiten Segment gelöst werden kann, eine größere Öffnung als in der vorher genannten Alternative erzeugt werden, durch die weitere Lebensmittel in den Raum eingeführt werden können.

Bevorzugt kann das zweite Segment innerhalb des ersten Segments angeordnet werden. Durch eine solche Ausgestaltung kann das Gerät platzsparend verstaut werden.

Bevorzugt können das erste und das zweite Segment aneinander mittels eines Bajonettverschluss befestigt werden. Ein solcher Bajonettverschluss ist einfach zu implementieren und kann leicht und ohne Werkzeuge gelöst werden. Andere Verschlussmöglichkeiten sind jedoch auch möglich, insbesondere Schnappverbindungen, Kniehebel oder Gewinde. Weiterhin wird bevorzugt, dass das Gerät an dem Behälter einen Ausguss zum Ausgießen von Lebensmittel aufweist, die verarbeitet wurden. Ein solcher Ausguss erleichtert das Servieren der verarbeiteten Lebensmittel.

Ferner weist das Gerät bevorzugt eine Basis auf, auf welcher der Behälter angeordnet ist, wobei der Behälter bevorzugt von der Basis gelöst werden kann. Wenn der Behälter von der Basis gelöst werden kann, kann der Behälter zum Beispiel zum Servieren der verarbeiteten Lebensmittel verwendet werden. Die Basis weist ferner bevorzugt einen elektrischen Antrieb zum Antreiben des Arbeitsteils auf.

Bevorzugt weist der Behälter einen Griff auf, welcher optional von dem Behälter lösbar ist. Durch einen solchen Griff kann der Behälter leichter bewegt werden. Wenn dieser lösbar ist, kann er auch zur Verbesserung des optischen Erscheinungsbildes entfernt werden. Auch kann der Raum verringert werden, der zum Aufbewahren des Behälters nötig ist.

Erfindungsgemäß sind Rippen an der Innenseite des Behälters vorgesehen. Diese verbessern die Verarbeitung der Lebensmittel durch eine Verbesserung der Zirkulation. Wenn das Gerät einen Ausguss aufweist, ist denkbar, dass sich dieser Ausguss von einer der Rippen aus erstreckt. Eine Kopplung des Ausgusses mit den Rippen lenkt die zu verarbeitenden Lebensmitteln in die richtige Richtung und erleichtert somit das Ausgießen.

Weiterhin weist das Gerät gemäß der Erfindung eine oder mehrere Innenwölbungen auf. Diese sind in dem Raum zwischen zwei Rippen vorgesehen und erstrecken sich in den Innenraum des Behälters hinein. Bevorzugt sind diese Innenwölbungen zwischen allen Rippen vorgesehen. Bei einer solchen Innenwölbung handelt es sich um einen Vorsprung, der in den Innenraum des Behälters hineinragt. Im Vergleich zu den Rippen sind die Innenwölbungen breiter ausgebildet, d. h. die Innenwölbungen erstrecken sich entlang der Umfangsrichtung über eine größere Länge als die Rippen. Ferner stehen sie auch weniger stark vor als die Rippen. Anders gesagt sind die Innenwölbungen flacher als die Rippen ausgestaltet, d. h. der Neigungswinkel der Innenwölbungen an dem Übergang zur Innenwand des Behälters ist kleiner als der entsprechende Neigungswinkel der Rippen und nimmt stetig ab, wenn man sich zur Mitte der Innenwölbungen hin bewegt.

Durch das Vorsehen dieser Innenwölbungen wird verhindert, dass zwischen den Rippen eine Art Totraum oder Tasche gebildet wird, in denen zähe Lebensmittel und größere zu verarbeitende Lebensmittelstücke stecken bleiben. Falls dies geschehe, bestünde die Gefahr, dass sich das Messer oder allgemeiner gesagt das Arbeitsteil frei dreht, ohne dass die Lebensmittel wieder zum Arbeitsteil rutschen und dort verarbeitet werden. Durch das Vorsehen der Innenwölbungen wird verhindert, dass sich Lebensmittel dort festsetzen können. Dies führt dann dazu, dass der Behälter auch für zähe Lebensmittel gut funktioniert, was ohne diese Innenwölbungen nicht der Fall wäre. Die Innenwölbungen füllen den Totraum zwischen den Rippen teilweise aus und bringen mehr Dynamik in die Beförderung der zu verarbeitenden Lebensmitteln und beschleunigen diese zusätzlich. Dies führt dann dazu, dass die zu verarbeitende Masse sich nicht an dieser Stelle ablagert, sondern zum Arbeitsteil bzw. Messer zurückgeführt wird, ohne dass die Strömung dabei wesentlich umgelenkt wird und ohne, dass das Verarbeitungsverhalten des Behälters komplett verändert wird, wie dies bei den stärker vorstehenden und steiler aufragenden konventionellen Rippen der Fall wäre. Statt den Innenwölbungen zusätzliche Rippen einzubringen würde zudem nur weitere Toträume schaffen, und somit die Verarbeitung bei zähen Lebensmitteln noch verschlechtern.

Bevorzugt weisen die Innenwölbungen eine Neigung bezüglich der Wand des Behälters auf, die kleiner oder gleich 30° ist. D. h. die Neigung der Tangentialebene der Innenwölbungen an dem Übergang zur Wand bezüglich der Tangentialebene der Wand selbst an diesen Übergang ist kleiner oder gleich 30°. Hierdurch wird eine vergleichsweise flache Neigung der Innenwölbungen bezüglich der Wand des Behälters definiert, so dass die Strömung nur leicht abgelenkt wird, was für das Verarbeitungsverhalten von Vorteil ist.

Bevorzugt wird, dass sie Innenwölbungen mindestens 30 %, bevorzugt mindestens 45 % der Fläche zwischen den Rippen ausfüllen. Dadurch wird festgelegt, dass die Innenwölbungen hinreichend groß sind, sodass sie einen nachweisbaren Effekt auf das Verarbeitungsverhalten des Geräts haben.

Weiterhin wird bevorzugt, dass die Länge der Innenwölbungen entlang der Umfangsrichtung des Behälters mindestens 60 % des Abstands zwischen den Rippen entlang der Umfangsrichtung ist. Auch hierdurch wird dafür gesorgt, dass die Innenwölbungen hinreichend groß sind, sodass sie die Verarbeitung der Lebensmittel signifikant beeinflussen.

Bevorzugt ist die Länge der Innenwölbungen entlang der Umfangsrichtung des Behälters mindestens 60 % des Abstands entlang der Umfangsrichtung zwischen den Rippen. Auch hierdurch wird dafür gesorgt, dass die Innenwölbungen hinreichend groß sind, sodass sie zu einer signifikanten Verarbeitung der Lebensmittel führen und eine nachweisbare Auswirkung auf das Verarbeitungsverhalten des Geräts haben.

Bevorzugt ist das Verhältnis der Breite b zur Länge L der Innenwölbungen an der breitesten Stelle der Innenwölbungen größer oder gleich 0,8, während das Verhältnis Breite b zu Länge L der Rippen an der breitesten Stelle der Rippen kleiner oder gleich 0,4 ist. Auch hierdurch wird die unterschiedliche Form der Breite der Rippen und der Innenwölbungen definiert.

Weiterhin wird bevorzugt, dass das Verhältnis der Tiefe t zur Breite b an der tiefsten Stelle der Innenwölbungen kleiner oder gleich 0,1 ist, während das Verhältnis der Tiefe t zur Breite b der tiefsten Stelle der Rippe größer oder gleich 0,5 ist. Hierdurch wird festgelegt, dass sich die Rippen weiter nach innen erstrecken, während die Innenwölbungen vergleichsweise flach sind. Durch dieses Merkmal wird somit verstärkt, dass die Lebensmittel durch die Innenwölbungen nach innen gelenkt werden.

Weiterhin wird bevorzugt, dass eine Seitenwand des Geräts flach bzw. eben ist. Hierdurch wird die Lagerung des Geräts erleichtert, da das Gerät direkt an eine flache Wand z.B. in einem Küchenschrank gestellt werden kann. Außerdem kann durch die Formänderung, die an dem Übergang von Kugelform in die flache Form entsteht, zusätzlich zu den Rippen die Zirkulation des Verarbeitungsgutes im Inneren des Behälters beeinflusst und optimiert werden.

### Kurze Beschreibung der Zeichnungen

- Figur 1: zeigt schematisch einen Querschnitt durch ein Gerät mit Aspekten einer ersten Ausführungsform der Erfindung.
- Figur 2: zeigt schematisch einen Querschnitt durch ein Gerät mit Aspekten einer zweiten Ausführungsform der Erfindung.
- Figur 3: zeigt schematisch einen Querschnitt durch ein Gerät mit Aspekten einer dritten Ausführungsform der Erfindung.
- Figur 4: zeigt schematisch einen Querschnitt durch ein zusammengelegtes Gerät nach der ersten Ausführungsform.
- Figur 5: zeigt eine Draufsicht auf ein Unterteil des Geräts nach der ersten Ausführungsform.
- Figuren 6: a) und b) zeigen ein Gerät nach einer vierten Ausführungsform.
- Figur 7: zeigt eine Ansicht auf ein Unterteil eines Geräts nach einer fünften Ausführungsform der Erfindung.
- Figur 8: zeigt im Vergleich zur Figur 7 eine Schnittansicht des Geräts gemäß der ersten Ausführungsform.
- Figur 9: zeigt eine weitere Schnittansicht des Geräts gemäß der fünften Ausführungsform.
- Figur 10: zeigt eine Draufsicht des Geräts gemäß der fünften Ausführungsform.
- Figuren 11 und 12: zeigen schematisch die Innenwölbungen des Geräts nach der fünften Ausführungsform.

### Detaillierte Beschreibung der Zeichnungen

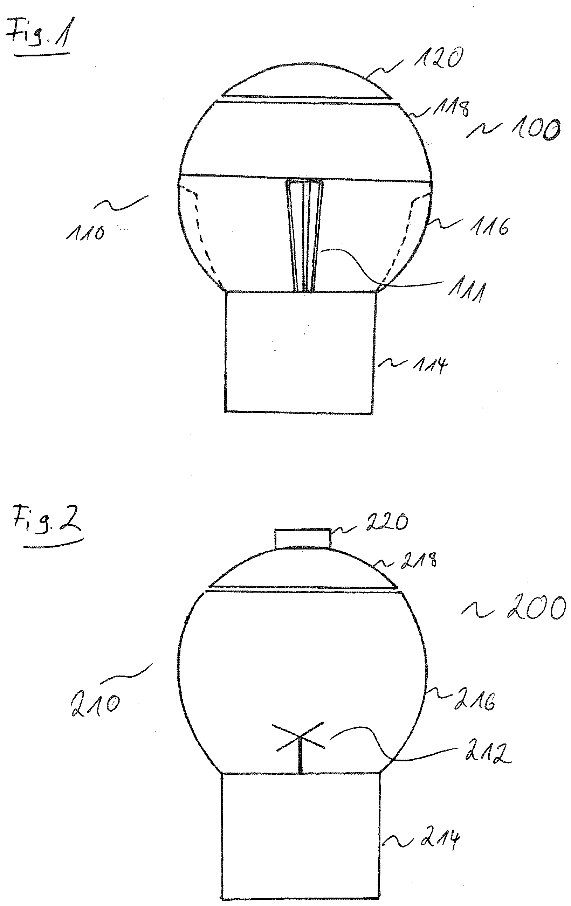

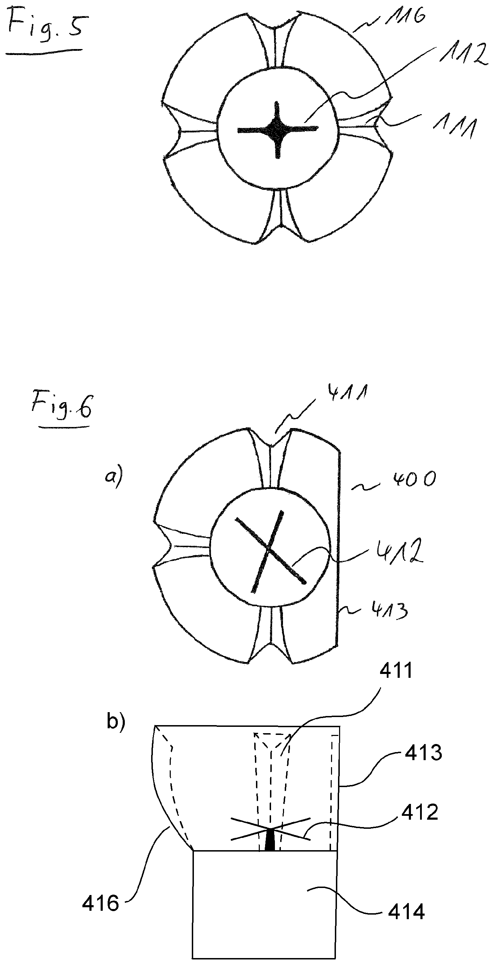

Fig. 1 und 5 zeigen schematisch ein Gerät 100 gemäß einer ersten Ausführungsform der Erfindung. Eine Basis 114 trägt an ihrer Oberseite ein erstes Segment 116, das die Form einer Halbkugel hat, deren Unterseite flach abgeschnitten wurde. Innerhalb dieses ersten Segments 116 befindet sich ein Arbeitsteil 112, welches schematisch dargestellt ist und welches durch einen (nicht dargestellten) Motor innerhalb der Basis 114 angetrieben werden kann.

Auf dem ersten Segment 116 ist ein zweites Segment 118 angeordnet, welches mit dem ersten Segment 116 durch einen Bajonettverschluss oder einen anderen Verschluss arretiert werden kann. Auf dem zweiten Segment 118 ist ein Deckel 120 vorgesehen, welcher das Gerät verschließt. Das erste Segment 116 definiert eine abgeschnittene Halbkugel. D.h. die abgeschnittene Kugel, die sich durch den Deckel 120, zweites Segment 180 und erstes Segment 116 ergibt, ist entlang der Mittelebene der ursprünglichen Kugel zerteilt. Die einzelnen Segmente 116, 118 und der Deckel 120 können aus verschiedenen Materialien hergestellt sein, und es ist auch möglich, dass zum Beispiel der Deckel 120 und/oder das zweite Segment 118 eine andere Form haben als das erste Segment 116 (also dass diese eine z.B. eine Kugelform mit unterschiedlichem Radius haben oder dass diese eine Ellipsoidform haben). Aus den oben erwähnten Gründen wird bevorzugt, dass die Außenform des Behälters 110 eine Kugel ist. Eine Flüssigkeit kann bis zu einem Füllstand innerhalb des zweiten Segments 118 eingefüllt werden. An der Innenseite des ersten Segments 116 sind (vorliegend vier) Rippen 111 vorgesehen, die sich bis zur Oberkante des ersten Segments 116 erstrecken. Es sind jedoch auch mehr oder weniger als vier Rippen denkbar.

Wie aus Figur 5 ersichtlich ist, befindet sich das Arbeitsteil 112 in der Form einer drehbaren Klinge an der abgeflachten Unterseite des ersten Segments 116. Auch sind die vier Rippen 111 ersichtlich, die sich an vier bezüglich der Drehachse des Arbeitsteils 112 um 90° versetzten Punkten befinden.

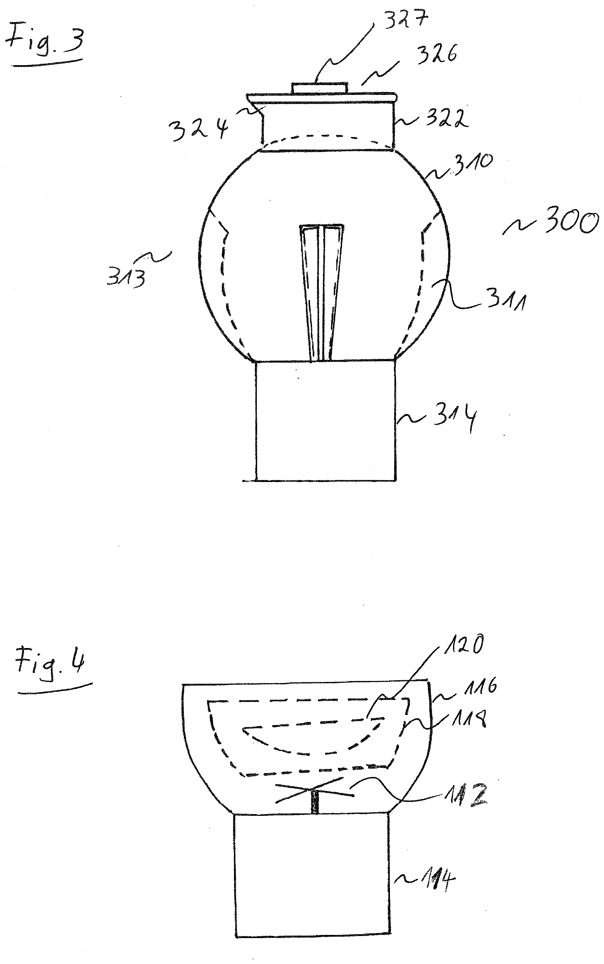

Figur 4 zeigt die erste Ausführungsform der Erfindung in einem demontierten Zustand. Hierbei ist das zweite Segment 118 innerhalb des ersten Segments 116 und oberhalb des Arbeitsteils 112 angeordnet. Das dritte Segment 120 ist innerhalb des zweiten Segments 118 angeordnet. Das Gerät kann in dem gezeigten Zustand platzsparend gelagert werden.

Fig. 2 zeigt eine zweite Ausführungsform der Erfindung. Hierbei ist auf einer Basis 214 ein erstes Segment 216 vorgesehen, welches sich deutlich weiter nach oben erstreckt als das vergleichbare erste Segment 116 der ersten Ausführungsform. Auch dieses erste Segment 216 umgibt ein Arbeitsteil 212 und ist an dem oberen Ende durch ein zweites Segment 218 verschlossen. Dieses zweite Segment 218 dient als Deckel und weist an seinem oberen Ende eine Öffnung auf, die durch einen separaten Verschluss 220 verschlossen ist. Durch diese Öffnung können Flüssigkeiten oder andere Bestandteile zugeführt werden, während das Gerät in Betrieb ist. Auch wenn hier keine Rippen dargestellt sind, können diese trotzdem vorhanden sein und z.B. die Konfiguration haben, die bezüglich der ersten Ausführungsform dargestellt ist. Die Rippen können in dieser Ausführungsform bis an das obere Ende des ersten Segments 216 reichen, können aber auch bereits tiefer enden.

Fig. 3 zeigt eine dritte Ausführungsform der Erfindung. Auch das Gerät 300 gemäß der dritten Ausführungsform weist eine Basis 314 auf, die ein erstes Segment 310 trägt. Dieses erste Segment 310 umgibt ein vorliegend nicht dargestelltes Arbeitsteil. An dem oberen Ende des ersten Segments 310 ist ein zweites, nicht kugelförmiges Segment 322 vorgesehen, welches einen Ausguss 324 aufweist, durch den verarbeitete Lebensmittel ausgegeben werden können. Das erste Segment 310 und das zweite Segment 322 bilden den Behälter 313. Am oberen Ende dieses Aufsatzes 322 ist ein Deckel 326 vorgesehen, welcher den Behälter verschließt und ein Herausspritzen von zu verarbeitenden Lebensmitteln verhindert. Diese Deckel 326 weist auch ein Loch auf, durch das ein Druckausgleich stattfinden kann, welches jedoch ein Herausspritzen von Flüssigkeiten im Vergleich zu einem geöffneten Deckel verhindert oder zumindest erschwert. Durch dieses Loch können während des Betriebs weitere Zutaten hinzugefügt werden. Das Loch kann durch einen Verschluss 327 verschlossen werden. Das zweite Segment 322 kann fest mit dem ersten Segment 310 verbunden sein, oder auch lösbar sein.

Die vorliegend beschriebenen Geräte der ersten, dritten und vierten Ausführungsform weisen Rippen in ihrem Innenraum und insbesondere an allen Segmenten, welche diesen Innenraum definieren, auf. Es ist möglich, die Ausgestaltung und Anordnung dieser Rippen an das jeweilige herzustellende Gericht anzupassen. So kann für das Herstellen von klebrigen oder pastösen Zubereitungen wie zum Beispiel Erdnussbutter eine andere Anordnung der Rippen von Vorteil sein als dies beim Herstellen von Smoothies oder beim Zerkleinern von Eis der Fall ist.

Es ist außerdem möglich, verschiedene Arbeitsteile zu verwenden. Zum Beispiel kann ein rotierendes Messer verwendet werden. Es wäre jedoch auch denkbar, einen Schneebesen zum Herstellen von Schlagsahne oder ein stumpfes Messer zum Zerkleinern von Eis zu verwenden. Letzteres hätte insbesondere den Vorteil, dass das Messer nicht mit der Zeit die Schärfe verliert und dass dieses somit eine höhere Lebensdauer hat.

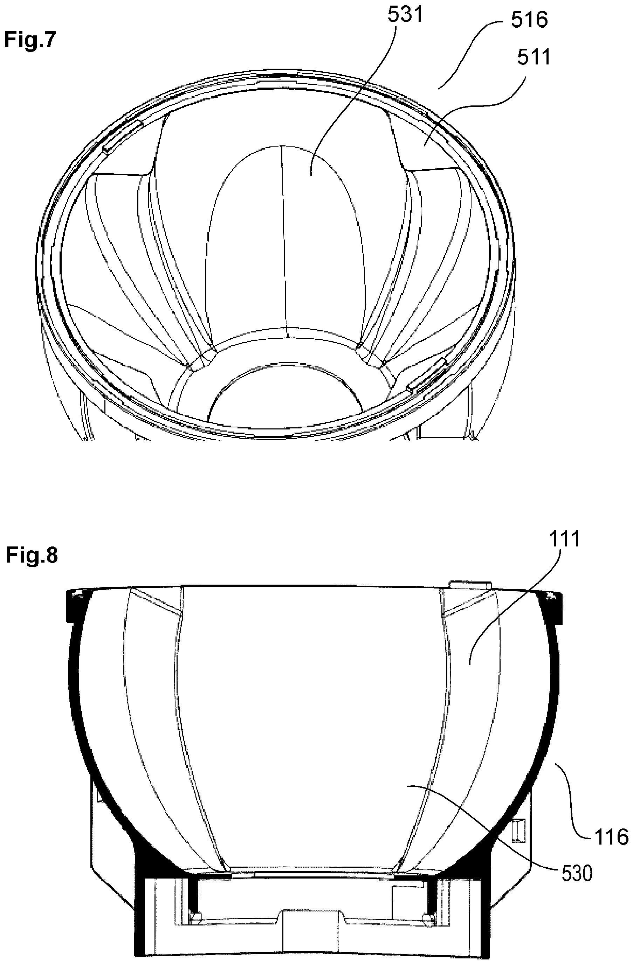

Figur 7 zeigt eine Ansicht eines Unterteils 516 eines Geräts nach einer fünften Ausführungsformen der Erfindung. Das Unterteil 516 weist hierbei Rippen 511 und Innenwölbungen 531 auf. Die Innenwölbungen 531 sind entlang der Umfangsrichtung zwischen den Rippen 511 vorgesehen. Dies wird insbesondere im Vergleich zu der Figur 8 deutlich, die einen Querschnitt durch ein Unterteil 116 eines Geräts nach der ersten Ausführungsform der Erfindung zeigt. Hierbei ist in dem Unterteil 116 zwischen den Rippen 111 keine Innenwölbung in der Tasche 530 vorgesehen. Demgemäß können in dem Gerät nach der ersten Ausführungsform Lebensmittel in dieser Tasche 530 liegen bleiben, was durch die Innenwölbungen 531 verhindert wird.

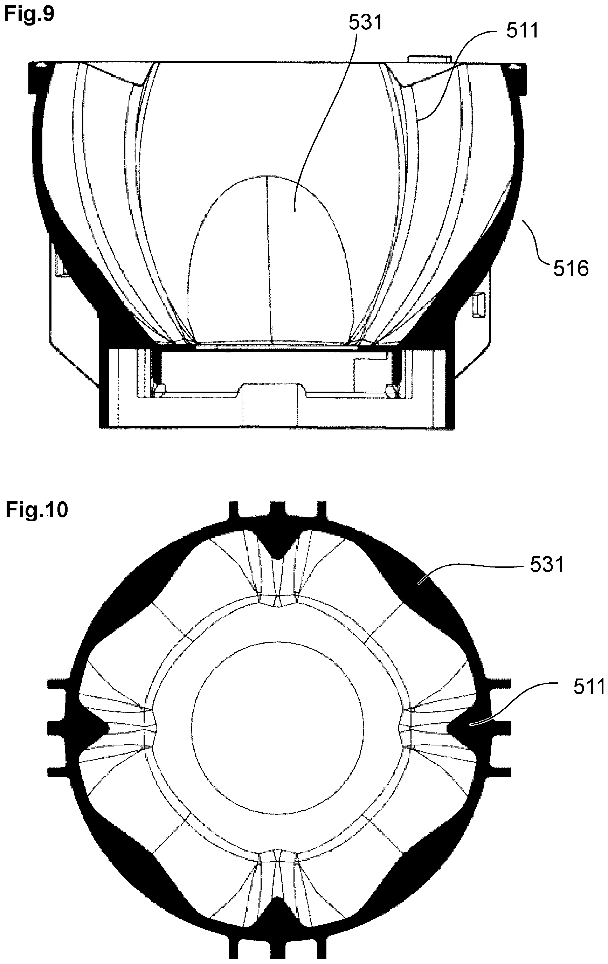

Diese Unterschiede werden auch aus den Figuren 9 und 10 deutlich. Hier werden in einer Draufsicht (Figur 10) bzw. in einer Seitenschnittansicht (Figur 9) ein Unterteil 516 gemäß der fünften Ausführungsform gezeigt. Hieraus wird deutlich, dass die Vorsprünge 531 im Vergleich zu den Rippen 511 deutlich flacher und weniger steil sind. Dies führt dazu, dass die verarbeitenden Lebensmittel ohne signifikante Störung des Flusses aus der Tasche herausgelenkt werden.

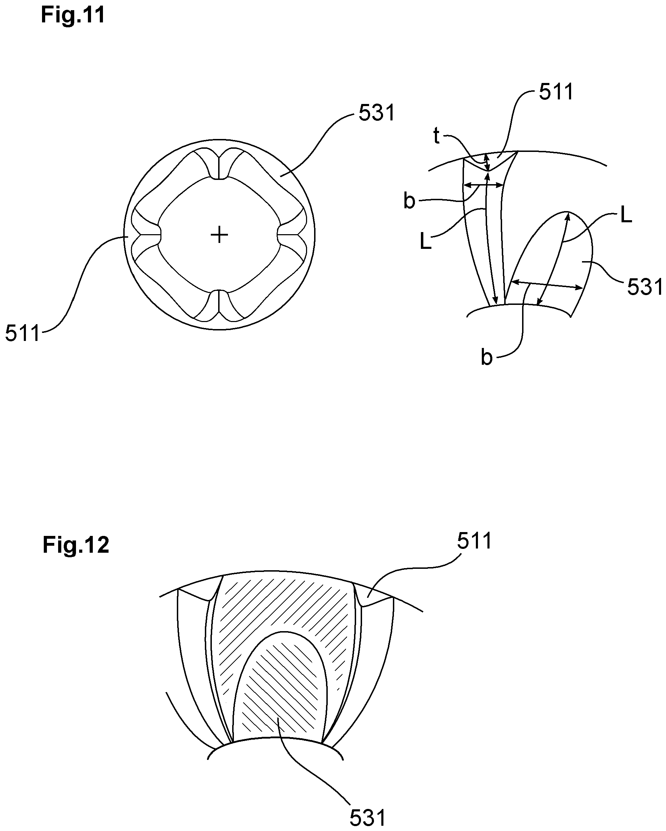

In Figuren 11 und 12 sind die Abmessungen der Rippen 511 und der Innenwölbungen 531 deutlicher zu sehen. Zu erkennen ist, dass die Innenwölbungen 531 einer kürzeren Länge L entlang der Axialrichtung haben als die Länge L der Rippen 511. Die Rippen weisen dafür eine signifikante Tiefe t auf, die größer ist als diejenige der Innenwölbungen 531. Ferner ist auch die Breite b der Innenwölbungen 531 größer als die Breite b der Rippen 511 entlang der Umfangsrichtung des Unterteils.

## Patentansprüche

1. Gerät (100, 200, 300, 400) zum Verarbeiten von Lebensmitteln mit:
einem Behälter (110, 210, 313), der Wände aufweist, die einen Raum definieren, in dem zu verarbeitende Lebensmittel aufgenommen werden können, und
einem Arbeitsteil (112, 212, 312, 412), das in dem Raum angeordnet ist und angetrieben werden kann, um die Lebensmittel zu verarbeiten,
wobei der durch die Wände definierte Raum eine Form hat, die zumindest in Teilen im Wesentlichen ein Kugelabschnitt ist,
ferner mit Rippen (111, 311, 411, 511), die an der Wand des Behälters so angeordnet sind, dass sie sich in den Innenraum erstrecken,
**dadurch gekennzeichnet, dass** das Gerät eine oder mehrere Innenwölbungen aufweist, die Innenwölbungen (531), sich zwischen den Rippen in den Innenraum des Behälters erstrecken,
wobei die Innenwölbung im Vergleich zu den Rippen flacher und weniger steil sind.

2. Gerät nach Anspruch 1, wobei die Kugelabschnittsform das Arbeitsteil umgibt und/oder wobei der Kugelabschnitt einen Abschnitt der Kugel umfasst, der größer ist als eine Halbkugel, wobei der Kugelabschnitt bevorzugt mehr als 70% einer Gesamtoberfläche der Kugel umfasst, wobei der Kugelabschnitt besonders bevorzugt eine Kugel ist.

3. Gerät nach Anspruch 1 oder 2, wobei der Behälter ein erstes (116) und ein zweites (118) Segment aufweisen, die lösbar miteinander verbunden sind und zusammen den Kugelabschnitt definieren, wobei das erste Segment das Arbeitsteil umgibt und das zweite Segment auf dem ersten Segment angeordnet ist.

4. Gerät nach Anspruch 3, wobei das erste und das zweite Segment zusammen eine Kugel als den Kugelabschnitt definieren, wobei das zweite Segment eine Öffnung aufweist, durch die Luft und/oder Flüssigkeiten in den Raum eingeführt werden können
oder ferner mit einem dritten Segment (120), das auf dem zweiten Segment (118) lösbar angeordnet ist, wobei das zweite Segment ringförmig ausgebildet ist, wobei das erste Segment (116) im Wesentlichen eine Halbkugel definiert und wobei das zweite und das dritte Segment zusammen im Wesentlichen eine Halbkugel definieren, wobei das dritte Segment bevorzugt eine Öffnung aufweist, durch die Luft und/oder Flüssigkeiten in den Raum eingeführt werden können.

5. Gerät nach einem der Ansprüche 3 bis 4, wobei das zweite Segment (418) innerhalb des ersten Segments (416) angeordnet werden kann und/oder
wobei das erste und das zweite Segment aneinander werkzeugfrei, bevorzugt mittels eines Bajonettverschluss, eines Gewindes oder eines Kniehebels, arretiert werden können.

6. Gerät nach einem der vorhergehenden Ansprüche, ferner mit einem Ausguss (324) zum Ausgießen von Lebensmitteln, die verarbeitet wurden.

7. Gerät nach einem der vorhergehenden Ansprüche, ferner mit einer Basis (114, 214, 314, 414), auf welcher der Behälter (110, 210, 313) angeordnet ist, wobei der Behälter bevorzugt von der Basis gelöst werden kann, wobei die Basis bevorzugt ferner einen Antrieb zum Antreiben des Arbeitsteils aufweist.

8. Gerät nach einem der vorhergehenden Ansprüche, wobei der Behälter einen Griff aufweist, wobei der Griff bevorzugt fest an dem Behälter vorgesehen ist oder wobei der Griff bevorzugt von dem Behälter lösbar ist.

9. Gerät nach einem der vorhergehenden Ansprüche 6 bis 8, wenn von Anspruch 9 abhängig, wobei sich der Ausguss (324) von einer Rippe aus erstreckt.

10. Gerät nach einem der vorhergehenden Ansprüche, wobei die Innenwölbungen zwischen allen Rippen vorgesehen sind, wobei die Innenwölbungen bevorzugt eine Neigung bezüglich der Wand des Behälters aufweisen, die kleiner oder gleich 30° ist, wobei die Neigung die Neigung der Tangentialebene der Innenwölbung an dem Übergang zur Wand bezüglich der Tangentialebene der Wand selbst ist.

11. Gerät nach einem der vorhergehenden Ansprüche, wobei die Innenwölbungen mindestens 30%, bevorzugt mindestens 45%, der Fläche zwischen den Rippen ausfüllen.

12. Gerät nach einem der vorhergehenden Ansprüche, wobei die Länge der Innenwölbungen entlang der Umfangsrichtung des Behälters mindestens 60% des Abstands entlang der Umfangsrichtung zwischen den Rippen ist.

13. Gerät nach einem der vorhergehenden Ansprüche, wobei das Verhältnis Breite b zur Länge L der Innenwölbungen an der breitesten Stelle der Innenwölbung größer oder gleich 0,8 ist, während das Verhältnis Breite zur Länge der Rippen an der breitesten Stelle der Rippen kleiner oder gleich 0,4 ist.

14. Gerät nach einem der vorhergehenden Ansprüche, wobei das Verhältnis Tiefe t zur Breite b an der tiefsten Stelle der Innenwölbungen kleiner oder gleich 0,1 ist, während das Verhältnis Tiefe t zur Breite b an der tiefsten Stelle der Rippe größer oder gleich 0,5 ist.

15. Gerät nach einem der vorhergehenden Ansprüche, wobei eine Seitenwand (413) des Behälters eben ist.

## Claims

1. Appliance (100, 200, 300, 400) for processing foodstuffs with:
a container (110, 210, 313) which has walls that define a space within which food which is to be processed can be accommodated, and
a working part (112, 212, 312, 412) which is located within the space and can be driven to process the food,
wherein the space defined by the walls has a form which is, at least in part, substantially a spherical segment,
also having ribs (111, 311, 411, 511) which are arranged on the wall of the container in such a way that they extend into the interior space,
**characterised in that** the appliance has one or more inner bulges, the inner bulges (531) extending between the ribs into the interior space of the container,
wherein the inner bulges are flatter and less steep compared to the ribs.

2. Appliance according to claim 1, wherein the spherical segment form surrounds the working part and/or wherein the spherical segment comprises a segment of the sphere which is larger than a hemisphere, wherein the spherical segment preferably comprises more than 70% of a total surface area of the sphere, wherein the spherical segment is particularly preferably a sphere.

3. Appliance according to claim 1 or 2, wherein the container has a first (116) and a second (118) segment which are detachably connected to each other and together define the spherical segment, wherein the first segment surrounds the working part and the second segment is arranged on the first segment.

4. Appliance according to claim 3, wherein the first and second segments together define a sphere as the spherical segment, wherein the second segment has an opening through which air and/or liquids can be introduced into the space,
or further having a third segment (120) which is arranged in a detachable manner on the second segment (118), wherein the second segment is formed in a ring shape, wherein the first segment (116) substantially defines a hemisphere, and wherein the second and third segments together substantially define a hemisphere, wherein the third segment preferably has an opening through which air and/or liquids can be introduced into the space.

5. Appliance according to one of the claims 3 to 4, wherein the second segment (418) can be arranged within the first segment (416) and/or
wherein the first and second segments can be locked to each other without tools, preferably by means of a bayonet lock, a thread or a toggle lever.

6. Appliance according to one of the preceding claims, further having a spout (324) for pouring out foodstuffs which have been processed.

7. Appliance according to one of the preceding claims, further having a base (114, 214, 314, 414) on which the container (110, 210, 313) is arranged, wherein the container can preferably be detached from the base, wherein the base preferably also has a drive for driving the working part.

8. Appliance according to one of the preceding claims, wherein the container has a handle, wherein the handle is preferably fixed to the container, or wherein the handle is preferably detachable from the container.

9. Appliance according to one of the preceding claims 6 to 8, if dependent on claim 9, wherein the spout (324) extends from a rib.

10. Appliance according to one of the preceding claims, wherein the inner bulges are provided between all the ribs, wherein the inner bulges preferably have an inclination with respect to the wall of the container which is less than or equal to 30°, wherein the inclination is the inclination of the tangent plane of the inner bulge at the transition to the wall with respect to the tangential plane of the wall itself.

11. Appliance according to one of the preceding claims, wherein the inner bulges fill at least 30%, preferably at least 45%, of the area between the ribs.

12. Appliance according to one of the preceding claims, wherein the length of the inner bulges along the circumferential direction of the container is at least 60% of the distance between the ribs along the circumferential direction.

13. Appliance according to one of the preceding claims, wherein the ratio width b to length L of the inner bulges at the widest point of the inner bulge is greater than or equal to 0.8, while the ratio of width to length of the ribs at the widest point of the ribs is less than or equal to 0.4.

14. Appliance according to one of the preceding claims, wherein the ratio depth t to width b at the deepest point of the inner bulges is less than or equal to 0.1, while the ratio depth t to width b at the deepest point of the rib is greater than or equal to 0.5.

15. Appliance according to one of the preceding claims, wherein one side wall (413) of the container is flat.

## Revendications

1. Appareil (100, 200, 300, 400) de traitement d'aliments avec :
un récipient (110, 210, 313), qui présente des parois qui définissent un espace dans lequel des aliments à traiter peuvent être reçus, et
un élément de travail (112, 212, 312, 412) qui est agencé dans l'espace et peut être entraîné afin de traiter les aliments,
dans lequel l'espace défini par les parois a une forme qui est au moins, par endroit, sensiblement une section sphérique,
de plus avec des nervures (111, 311, 411, 511) qui sont agencées au niveau de la paroi du récipient de sorte qu'elles s'étendent dans l'espace intérieur,
**caractérisé en ce que** l'appareil présente une ou plusieurs courbures intérieures, les courbures intérieures (531) s'étendent entre les nervures dans l'espace intérieur du récipient,
dans lequel la courbure intérieure est plus plate et moins pentue par rapport aux nervures.

2. Appareil selon la revendication 1, dans lequel la forme de section sphérique entoure l'élément de travail et/ou dans lequel la section sphérique comprend une section de la sphère qui est plus grande que l'hémisphère, dans lequel la section sphérique comprend de préférence plus de 70 % d'une surface entière de la sphère, dans lequel la section sphérique est de manière particulièrement préférée une sphère.

3. Appareil selon la revendication 1 ou la revendication 2, dans lequel le récipient présente un premier (116) et un deuxième (118) segment qui sont reliés l'un à l'autre de manière détachable et définissent ensemble la section sphérique, dans lequel le premier segment entoure l'élément de travail et le deuxième segment est agencé sur le premier segment.

4. Appareil selon la revendication 3, dans lequel le premier et le deuxième segment définissent ensemble une sphère comme la section sphérique, dans lequel le deuxième segment présente une ouverture, par laquelle de l'air et/ou des liquides peuvent être introduits dans l'espace
ou de plus avec un troisième segment (120) qui est agencé de manière détachable sur le deuxième segment (118), dans lequel le deuxième segment est réalisé de manière annulaire, dans lequel le premier segment (116) définit sensiblement un hémisphère et dans lequel le deuxième et le troisième segment définissent ensemble sensiblement un hémisphère, dans lequel le troisième segment présente de préférence une ouverture, par laquelle de l'air et/ou des liquides peuvent être introduits dans l'espace.

5. Appareil selon l'une quelconque des revendications 3 à 4, dans lequel le deuxième segment (418) peut être agencé à l'intérieur du premier segment (416) et/ou
dans lequel le premier et le deuxième segment peuvent être arrêtés l'un au niveau de l'autre sans outil, de préférence au moyen d'une fermeture à baïonnette, d'un filet ou d'un levier à genouillère.

6. Appareil selon l'une quelconque des revendications précédentes, de plus avec un bec (324) pour le déversement d'aliments qui ont été traités.

7. Appareil selon l'une quelconque des revendications précédentes, de plus avec une base (114, 214, 314, 414), sur laquelle le récipient (110, 210, 313) est agencé, dans lequel le récipient peut être détaché de préférence de la base, dans lequel la base présente de préférence de plus un entraînement pour l'entraînement de l'élément de travail.

8. Appareil selon l'une quelconque des revendications précédentes, dans lequel le récipient présente une poignée, dans lequel la poignée est de préférence prévue de manière fixée au récipient ou dans lequel la poignée est de préférence détachable du récipient.

9. Appareil selon l'une quelconque des revendications précédentes 6 à 8, lorsqu'elle dépend de la revendication 9, dans lequel le bec (324) s'étend depuis une nervure.

10. Appareil selon l'une quelconque des revendications précédentes, dans lequel les courbures intérieures sont prévues entre toutes les nervures, dans lequel les courbures intérieures présentent de préférence une inclinaison par rapport à la paroi du récipient qui est inférieure ou égale à 30°, dans lequel l'inclinaison est l'inclinaison du plan tangentiel de la courbure intérieure au niveau de la transition vers la paroi par rapport au plan tangentiel de la paroi elle-même.

11. Appareil selon l'une quelconque des revendications précédentes, dans lequel les courbures intérieures remplissent au moins 30 %, de préférence au moins 45 %, de la surface entre les nervures.

12. Appareil selon l'une quelconque des revendications précédentes, dans lequel la longueur des courbures intérieures le long du sens périphérique du récipient est au moins de 60 % de la distance le long du sens périphérique entre les nervures.

13. Appareil selon l'une quelconque des revendications précédentes, dans lequel le rapport entre la largeur b et la longueur L des courbures intérieures est supérieur ou égal à 0,8 à l'endroit le plus large de la courbure intérieure, alors que le rapport entre la largeur et la longueur des nervures est inférieur ou égal à 0,4 à l'endroit le plus large des nervures.

14. Appareil selon l'une quelconque des revendications précédentes, dans lequel le rapport entre la profondeur t et la largeur b est inférieur ou égal à 0,1 à l'endroit le plus profond des courbures intérieures, alors que le rapport entre la profondeur t et la largeur b est supérieur ou égal à 0,5 à l'endroit le plus profond.

15. Appareil selon l'une quelconque des revendications précédentes, dans lequel une paroi latérale (413) du récipient est plate.
